Europäisches Patentamt

European Patent Office

Office européen des brevets

(11) Veröffentlichungsnummer: **0 226 895**
**B1**

(12) **EUROPÄISCHE PATENTSCHRIFT**

(45) Veröffentlichungstag der Patentschrift:
**16.08.89**

(21) Anmeldenummer: **86116748.4**

(22) Anmeldetag: **02.12.86**

(51) Int. Cl.⁴: **C 10 B 53/00,** C 10 G 1/10,
C 10 G 1/02

(54) **Verfahren zum pyrolytischen Aufarbeiten von Ausgangsmaterial.**

(30) Priorität: **23.12.85 DE 3545954**

(43) Veröffentlichungstag der Anmeldung:
**01.07.87 Patentblatt 87/27**

(45) Bekanntmachung des Hinweises auf die Patenterteilung:
**16.08.89 Patentblatt 89/33**

(84) Benannte Vertragsstaaten:
**AT BE CH DE ES FR GB GR IT LI NL SE**

(56) Entgegenhaltungen:
**FR-A- 2 375 030**
**US-A- 3 843 457**

(73) Patentinhaber: **Asea Brown Boveri Aktiengesellschaft,
Kallstadter Strasse 1, D-6800 Mannheim-Käfertal (DE)**

(72) Erfinder: **Timmann, Hinrich, Dr., Oktaviostrasse 16a,
D-2000 Hamburg 70 (DE)**

(74) Vertreter: **Rupprecht, Klaus, Dipl.-Ing. et al, c/o Asea
Brown Boveri Aktiengesellschaft Zentralbereich
Patente Postfach 100351, D-6800 Mannheim 1 (DE)**

## Beschreibung

Die Erfindung betrifft ein Verfahren zum pyrolytischen Aufarbeiten von Kunststoff, Gummi, andere Kohlenwasserstoffmaterialien und dergleichen enthaltendem Ausgangsmaterial, wie Altgummi, Altreifen und/oder Kunststoffabfällen, wobei das bei der Pyrolyse entstehende Pyrolysegas abgekühlt, das entstandene Kondensat abgetrennt und das verbleibende Produktgas teilweise in die Pyrolyse zurückgeleitet und teilweise verwertet und/oder weiterverarbeitet wird. Ein derartiges Verfahren ist aus der FR-A-2 375 030 bekannt.

Bei der Pyrolyse von Kohlenwasserstoffmaterial, insbesondere Altreifen von Kraftfahrzeugen, entstehen neben anderen Stoffen verwertbare Produktgase.

Die Produktgase sind umso wertvoller, je größer der Anteil an Aromaten (aromatische Kohlenwasserstoffverbindungen) ist. Diese Aromaten wie Benzol sind nämlich für eine Weiterverarbeitung oder Verwendung als Grundstoff in der chemischen Industrie besonders gut geeignet.

Die Erfindung geht daher von der Aufgabe aus, bei dem eingangs genannten Verfahren mit einfachen Mitteln und kostengünstig den Anteil an Aromaten in dem Produktgas zu erhöhen. Darüberhinaus soll die Anzahl der Komponenten des Produktgases verringert und gleichzeitig ihre Erzeugung in möglichst in reiner Form erleichtert werden.

Diese Aufgabe wird erfindungsgemäß dadurch gelöst, daß zumindest ein Teilstrom des Gases auf einen Druck von ungefähr 0,8 bis 1,4 bar Überdruck und dann in einer Kühlstufe auf eine dicht über dem Gefrierpunkt des Wassers liegende Temperatur gebracht wird, daß das in der Kühlstufe entstandene Kaltkondensat abgetrennt, auf einen geringeren Druck, vorzugsweise auf Atmosphärendruck entspannt wird und auf eine normale Lagertemperatur im Bereich üblicher Umgebungstemperaturen erwärmt wird, und daß das dabei freiwerdende Gas als Sonderproduktgas in die Pyrolyse zurückgeleitet wird.

Bei dem erfindungsgemäßen Verfahren wird von der an sich bekannten Tatsache Gebrauch gemacht, daß durch Anwesenheit von gasförmigen ungesättigten $C_4$-Kohlenwasserstoffverbindungen, wie z.B. Buten $C_4 H_8$ und/oder Butadien $C_4 H_6$, in der Pyrolyse die Bildung von Aromaten stark gefördert wird. Es hat sich gezeigt, daß durch das Abkühlen des Pyrolysegases auf Temperaturen dicht oberhalb des Gefrierpunktes des Wassers — um ein Vereisen zu verhindern, soll der Gefrierpunkt des Wasser nicht unterschritten werden — ein Kaltkondensat in Form eines leichten Produktöls, d.h. eines Leichtöls, gebildet wird. Dieses leichte Produktöl enthält nahezu die gesamten $C_4$-Kohlenwasserstoffverbindungen des abgekühlten Pyrolysegases in Gemeinschaft mit Benzol und anderen Leichtölkomponenten. Das anschließende Entspannen des unter Überdruck stehenden Kaltkondensats bewirkt, daß die $C_4$-Kohlenwasserstoffverbindungen zu einem großen Teil wieder in die Gasphase übergehen. Diese gasförmigen $C_4$-Kohlenwasserstoffverbindungen werden dann in die Pyrolyse eingeleitet und fördern dort die Bildung von Aromaten. Das in dem Kaltkondensat gelöste Benzol bleibt während des Entspannungsvorganges weitgehend in der flüssigen Phase. Dieses Benzol ist sehr wertvoll und kann weiterverarbeitet werden. Durch die erfindungsgemäße Steigerung des Anteils an Aromaten im Pyrolysegas ist auch ihr Anteil im Kaltkondensat wesentlich erhöht. Hierdurch ist die Wirtschaftlichkeit des Pyrolyseverfahrens gesteigert. Die Entspannung des Kaltkondensats erfolgt auf einen Überdruck von ungefähr 0,1 bis 0,3 bar, vorzugsweise erfolgt die Entspannung auf Atmosphärendruck.

Eine bevorzugte Weiterbildung der Erfindung besteht darin, daß das Pyrolysegas vor dem Eintritt in die Kühlstufe in einer Vorkühlstufe auf eine Temperatur im Bereich von etwa 100-150°C abgekühlt und das dabei entstehende Heißkondensat abgetrennt wird. Durch das Entfernen des Heißkondensates, das in Form eines heißen Öles entsteht, werden teerartige und staubförmige Komponenten weitgehend aus dem Verfahren entfernt. Dies bietet den Vorteil, daß diese Komponenten, die eine stark emulgierende Wirkung auf Öl-Wasser-Gemische haben, die Trennung von Öl und Wasser im Kaltkondensat der Kühlstufe nicht mehr stören können. Dies ist wichtig, da wegen der starken Kühlung des Pyrolysegases in der Kühlstufe außer Leichtöl auch Wasser entsteht.

Am günstigsten ist es, wenn das Pyrolysegas in der Vorkühlstufe auf eine Temperatur von etwa 110-130°C, vorzugsweise ungefähr 120°C, abgekühlt wird. Hierdurch wird der Aufwand an Kühlmittel möglichst gering gehalten, ohne die Abscheidung der teerartigen und staubförmigen Komponenten zu verschlechtern. Darüberhinaus ist das anfallende Heißkondensat wasserfrei.

Ebenso vorteilhaft ist es, daß das Pyrolysegas auf einen Überdruck von ungefähr 0,9 bis 1,2 bar, vorzugsweise auf ungefähr 1 bar gebracht wird.

Als dicht über dem Gefrierpunkt des Wassers liegende Temperatur wird vorteilhaft eine Temperatur von ungefähr 0,5 bis 2°C, vorzugsweise ungefähr 1°C benutzt. Hierdurch ist ein ausreichender Abstand zum Gefrierpunkt des Wassers eingehalten, sodaß mit einfachen thermostatischen Regeleinrichtungen das Ausmaß der Abkühlung überwacht werden kann.

Um einen sicheren Übergang der $C_4$-Kohlenwasserstoffverbindungen des Kaltkondensats in die Gasphase sicherzustellen, empfiehlt es sich, daß die Lagertemperatur, auf die das Kaltkondensat erwärmt wird, ungefähr 20 bis 30°C, vorzugsweise 25°C beträgt.

Wenn die Pyrolyse in einer Wirbelschicht abläuft, die durch Zufuhr eines Wirbelgases aufrechterhalten wird, ist es vorteilhaft, das einen hohen Anteil von $C_4$-Kohlenwasserstoffverbindungen enthaltende Sonderproduktgas zusammen mit dem Wirbelgas der Pyrolyse zuzuführen. Hierbei ist es empfehlenswert, das Wirbelgas im unteren Bereich des Pyrolysereaktors in der Nähe der Seitenwand mit einer Einblasrichtung von oben nach unten einzublasen.

Wird die Pyrolyse in einer drehbaren, hohlzylindrischen Retorte durchgeführt, ist es am zweckmäßigsten, das Sonderproduktgas im Bereich des Eintritts der Kohlenwasserstoffmaterialien in die Retorte einzuführen. In beiden vorgenannten Fällen wird durch die entsprechende Wahl der Zuführung des Sonderproduktgases eine innige Mischung mit den Pyrolyseprodukten erzielt und die Bildung von Aromaten gefördert.

Wie sich vorstehendem ergibt, erfordert das erfindungsgemäße Verfahren keinen ins Gewicht fallenden Mehraufwand. Dies gilt besonders dann, wenn man in der üblichen Weise die verschiedenen Kühlstufen zu einer Einheit zusammenfaßt.

Die Erfindung wird im folgenden Anhand von Ausführungsbeispielen in Verbindung mit den Zeichnungen näher erläutert. Hierbei zeigt:

Fig. 1 eine schematische Darstellung einer für die Durchführung der Erfindung geeigneten pyrolyseanlage und

Fig. 2 eine Ausführungsvariante des Pyrolysereaktors der Anlage gemäß Figur 1 als Einzelheit.

In der folgenden Beschreibung sind Bauteile, die für das erfindungsgemäße Verfahren unwesentlich sind, nicht beschrieben oder dargestellt.

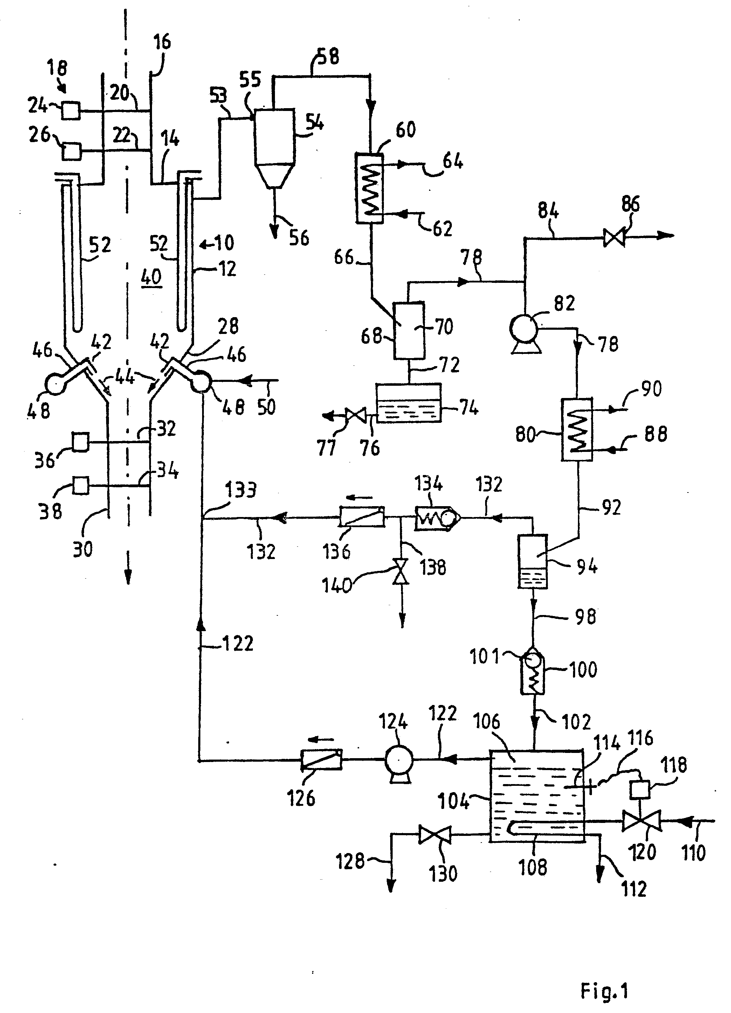

Die Pyrolyseanlage gemäß Figur 1 weist einen Pyrolysereaktor 10 auf, der mit einer Wirbelschicht arbeitet, die von feinkörnigem Wirbelschichtmaterial, z.B. Sand, gebildet wird. Der im zentralen Vertikalschnitt dargestellte Pyrolysereaktor 10 weist ein vertikales, hohlzylindrisches Gehäuse 12 auf, an dessen Decke 14 ein ebenfalls vertikal verlaufendes zentrales Zufuhrrohr 16 für das Ausgangsmaterial vorgesehen ist. Das Zufuhrrohr 16 ist mit einer Eingangsschleuse 18 versehen, die aus zwei mit Abstand übereinander angeordneten Absperrschiebern 20 bzw. 22 besteht. Diese Absperrschieber können durch Stellmotoren 24 bzw. 26 betätigt werden.

Der untere Bereich 28 des Gehäuses 12 verjüngt sich trichterartig und geht in das zentrale Ausgangsrohr 30 für Pyrolyserückstände über. Das Ausgangsrohr 30 verläuft vertikal und ist ebenfalls mit zwei Absperrschiebern 32. bzw. 34 versehen, die mit Abstand übereinander angeordnet sind und eine Ausgangsschleuse bilden. Für die Betätigung dieser Absperrschieber 32, 34 sind Stellmotoren 36 bzw. 38 vorgesehen.

Im Innenraum 40 des Pyrolysereaktors ist im unteren Bereich 28 eine Vielzahl von Blasmündungen 42 vorgesehen, durch die ein gasförmiges Wirbelmedium, z.B. Stickstoff, zur Bildung der Wirbelschicht in den Innenraum 40 eingeblasen wird. Die Blasmündungen 42 sind in unmittelbarer Nähe der Innenwand angeordnet und zeigen nach unten zum Ausgangsrohr 30 hin, sodaß das Wirbelmedium entlang der Innenwand des Bereichs 28 nach unten eingeblasen wird. Die Blasrichtung ist hierbei durch Pfeile 44 dargestellt. Die Blasmündungen 42 sind an den Enden von Rohren 46 angeordnet, welche den trichterförmigen Bereich 28 ungefähr rechtwinklig durchdringen. Die Blasmündungen 42 können hierbei als einfache Öffnungen ausgebildet sein, es besteht jedoch auch die Möglichkeit, die Blasmündungen in Form von Düsen auszubilden. Die Rohre 46 sind weiterhin an eine horizontale Ringleitung 48 angeschlossen, welche den unteren Bereich 28 umgibt. Der Ringleitung 48 wird durch die Rohrleitung 50 das Wirbelgas von einem in der Zeichnung nicht dargestellten, geeigneten Speicher zugeführt.

Im Innenraum 40 ist weiterhin eine Vielzahl von vertikal verlaufenden, geraden Heizrohren 52 vorgesehen, die sich bis in die Nähe des trichterförmigen Bereichs 28 bzw. der Blasmündungen 42 erstrecken. Diese Heizrohre dienen zur Erzeugung der Pyrolysetemperatur und sind daher mit einer nicht dargestellten Gasheizung versehen. Die Heizrohre 52 verlaufen in der Nähe der zylindrischen Innenwand des Gehäuses 12 und sind gleichmäßig über den Umfang verteilt angeordnet. Hierbei sind die Heizrohre durch jenen kreisringförmigen Bereich des Deckels 14 in den Innenraum 40 eingeführt, der das Gehäuse 12 mit dem Zufuhrrohr 16 verbindet.

Im oberen, zylindrischen Bereich des Gehäuses 12 ist eine Rohrleitung 53 angeschlossen, die den Innenraum 40 mit dem Gaseintrittsstutzen 55 eines Zyklonabscheiders 54 verbindet, an dessen unteren Ende eine Leitung 56 für die Abfuhr der abgeschiedenen Feststoffe vorgesehen ist. Vom oberen Ende des Zyklonabscheiders führt eine Gasleitung 58 zu der Vorkühlstufe 60. Die Vorkühlstufe besteht aus mindestens einem Wärmetauscher. Als Kühlmittel wird dem Wärmetauscher Luft oder Wasser durch die Leitungen 62 und 64 zugeführt bzw. abgeführt. Wie aus Figur 1 zu erkennen ist, wird das Kühlmittel im Gegenstrom durch die Kühlrohre des Wärmetauschers geführt.

Vom unteren Ende der Vorkühlstufe 60 führt eine Rohrleitung 66 mit Gefälle zu einem stehenden zylindrischen Heißabscheider 68, in dem das zugeführte Gemisch aus Heißkondensat und Pyrolysegas getrennt wird. Hierzu mündet die Rohrleitung 66 schräg nach unten zeigend in den Innenraum 70 des Heißabscheiders. Das Heißkondensat fällt nach unten und wird durch die Leitung 72 in einen geschlossenen Heißkondensatbehälter 74 geleitet, von dem es durch die Rohrleitung 76 mit eingefügtem Absperrorgan 77 entnommen werden kann. Im Heißabscheider 68 strömt das Gas, das jetzt als Produktgas bezeichnet wird, nach oben und wird durch die Leitung 78 der Kühlstufe 80 zugeführt. Hierbei ist in die Leitung 78 eine Gaspumpe oder ein Gasverdichter 82 eingeschaltet, der das zugeführte Produktgas auf einen Überdruck von ungefähr 1 bar verdichtet. Zusätzlich ist noch eine Produktgasleitung 84 stromauf der Gaspumpe 82 an die Leitung 78 angeschlossen und mit einem Absperrorgan 86 versehen.

Die Kühlstufe 80 ist ähnlich aufgebaut wie die Vorkühlstufe 60 und besitzt mindestens einen Wärmetauscher. Das Kühlmittel wird durch die Leitungen 88 und 90 zugeführt bzw. abgeführt, wobei das Kühlmittel im Gegenstrom durch den Wärmetauscher geführt wird. Als Kühlmittel wird hier bevorzugt eine Kühlsole verwendet, deren Temperatur durch eine in Figur 1 nicht dargestellte Kühleinrichtung auf eine Temperatur von mindestens −3 bis −5°C gebracht wird.

Das in der Kühlstufe 80 entstehende Gemisch aus Kaltkondensat und Gas wird durch die Kondensatleitung 92 einem Kaltabscheider 94 zugeführt, der genauso aufgebaut ist wie der Heißabscheider 68. Das abgeschiedene Kaltkondensat wird durch die Leitung 98 einem Druckhalteventil 100 zugeführt. Dieses Druckhalteventil 100 weist eine durch eine Feder belastete Absperrkugel 101 auf und läßt nur soviel Kaltkondensat durchtreten, daß ein am Ventil eingestellter Druck, im vorliegenden Beispiel ungefähr 1 bar, in den Bauteilen 78, 80, 92, 94, 98 aufrechterhalten wird. Dieser Druck wird hierbei von der Gaspumpe 82 erzeugt. Jenes Kaltkondensat, das vom Druckhalteventil 100 durchgelassen wird, strömt durch die Rohrleitung 102 zu einem geschlossenen Behälter 104 und wird dort gesammelt. Da im Innenraum 106 des Behälters ungefähr Atmosphärendruck, d.h. der Druck der Umgebungsluft herrscht, wird das Kaltkondensat beim Durchströmen des Druckhalteventils 100 von seinem Überdruck von 1 bar auf Umgebungsdruck entspannt.

In der Nähe des Bodens des Behälters 104 ist eine Heizeinrichtung 108 zweckmäßig in Form einer Rohrschlange vorgesehen, der ein Heizmedium, z.B. Heizwasser, durch die Leitung 110 zugeführt und durch die Leitung 112 abgeführt wird. Oberhalb der Heizeinrichtung 108 ist in jenem Bereich des Innenraums 106, der vom Kalkondensat angefüllt ist, ein Temperaturfühler 114 angeordnet, der über eine Steuerleitung 116 auf den Stellmotor 118 eines Regelventils 120 einwirkt. Dieses Regelventil ist in der Leitung 110 angeordnet, sodaß die Zufuhr von Heizmedium zur Heizeinrichtung 108 so geregelt wird, daß das Kaltkondensat auf die am Temperaturfühler 114 eingestellte Temperatur von 25°C erwärmt wird.

Der obere Bereich des Innenraums 106, der Gas enthält, ist durch eine Sonderproduktgasleitung 122 mit der Ringleitung 48 des Pyrolysereaktors 10 verbunden. Hierbei ist in die Sonderproduktgasleitung 122, in Strömungsrichtung des Gases gesehen, eine Gaspumpe 124 sowie ein Rückflußverhinderer in Form eines Rückschlagventils 126 eingeschaltet. Das Rückschlagventil 126 verhindert hierbei ein Rückströmen von Gas aus der Ringleitung 48 zum Innenraum 106. In der Nähe des Bodens des Behälters 104 ist eine Abflußleitung 128 mit eingefügtem Absperrorgan 130 angeschlossen. Durch diese Abflußleitung können das Kaltkondensat und gegebenenfalls Rückstände wie z.B. Wasser aus dem Behälter 104 abgezogen werden.

An den Gasausgang des Kaltabscheiders 94 ist eine Umgehungsleitung 132 angeschlossen, die an der Stelle 133 in die Sonderproduktgasleitung 122 stromauf der Ringleitung 48 mündet. In diese Umgehungsleitung 132 ist in Strömungsrichtung gesehen ein weiteres Druckhalteventil 134 sowie ein weiterer Rückflußverhinderer in Form eines weiteren Rückschlagventils 136 hintereinander angeordnet. Das weitere Druckhalteventil 134 ist in seinem Aufbau und in seiner Arbeitsweise identisch mit dem Druckhalteventil 100. Zwischen dem weiteren Druckhalteventil 134 und dem weiteren Rückschlagventil 136 ist an die Umgehungsleitung 132 eine Gasleitung 138 angeschlossen, in die ein Absperrorgan 140 eingefügt ist. Durch diese Gasleitung kann überschüssiges Gas entnommen werden. Ebenso kann überschüssiges Gas durch die Produktgasleitung 84 abgeführt werden und genauso wie das Gas aus der Gasleitung 138 z.B. als Brenngas verwendet werden. Insbesondere kann dieses Brenngas für die Beheizung der Heizrohre 52 eingesetzt werden.

Während des Betriebs wird durch die Rohrleitung 50 ein Wirbelgas, z.B. Stickstoff, über die Ringleitung 48 und die Rohre 46 den Blasmündungen 42 zugeführt. Das Wirbelgas strömt hierbei entlang der Innenwand des trichterförmigen Bereiches 28 nach unten (Pfeile 44) und verwirbelt das im Innenraum 40 vorhandene feinkörnige Wirbelmedium, z.B. Sand, und bildet eine Wirbelschicht, die in der Zeichnung nicht dargestellt ist. Die Absperrschieber 20, 22, 32, 34 sind hierbei geschlossen. Nachdem die Wirbelschicht durch die Heizrohre 52 auf eine Temperatur von ungefähr 500 bis 850°C aufgeheizt ist, wird das Ausgangsmaterial, insbesondere Altreifen, durch die Eingangsschleuse 18 in den Innenraum 40 eingebracht. Hierzu wird zunächst der Absperrschieber 20 geöffnet und bei geschlossenem Absperrschieber 22 Altreifen in das Zufuhrrohr 16 bis zum Absperrschieber 20 eingefüllt. Jetzt wird der Absperrschieber 20 geschlossen und der untere Absperrschieber 22 geöffnet, sodaß die Altreifen in den Innenraum 40 fallen, von der Wirbelschicht erfaßt und der Pyrolyse unterworfen werden. Die Absperrschieber 20 und 22 sind hierbei geschlossen. Das Öffnen und Schließen dieser Absperrschieber erfolgt mit Hilfe der Stellmotoren 24 bzw. 26. Die Pyrolyse verläuft ohne Zufuhr von Luft.

Die festen Reststoffe der Pyrolyse werden mit Hilfe der Absperrschieber 32 und 34, welche eine Ausgangsschleuse bilden, aus dem Innenraum 40 entfernt. Hierzu wird zunächst der Absperrschieber 32 mit Hilfe des Stellmotors 36 geöffnet, sodaß diese Reststoffe auf den Absperrschieber 34 fallen. Nach dem Schließen des Absperrschiebers 32 wird der untere Absperrschieber 34 durch den Stellmotor 38 geöffnet, sodaß die Reststoffe durch das Ausgangsrohr nach außen fallen und entfernt werden können. Nach diesem Vorgang wird dann der Absperrschieber 34 wieder geschlossen. Auf vorbeschriebene Weise kann das zu pyrolysierende Ausgangsmaterial kontinuierlich zugeführt und abgeführt werden, ohne daß Gas aus dem Innenraum 40 austritt.

Das bei der thermischen Zersetzung der Altreifen entstandene Pyrolysegas hat eine Temperatur von etwa 400-800°C und wird durch die Rohrleitung 53 dem Zyklonabscheider 54 zugeführt. Hier werden vom Gas mitgerissene Feststoffteilchen abgeschieden und durch die Leitung 56 aus dem Zyklonabscheider entfernt. Vom Zyklonabscheider 54 wird das gereinigte Pyrolysegas durch die Gasleitung 58 der Vorkühlstufe 60 zugeführt. Durch das über die Leitung 62 zugeführte Kühlmedium wird das Pyrolysegas in der Vorkühlstufe 60 auf eine Temperatur von vorzugsweise ungefähr 120°C abgekühlt. Hierbei kondensiert ein Teil des Gases und es entsteht ein wasserfreies Heißkondensat, das zusammen mit dem verbleibenden Gasanteil durch die Rohrleitung 66 dem Heißabscheider 68 zugeführt wird.

Im Innenraum 70 des Heißabscheiders trennen sich Heißkondensat und Gas. Das Heißkondensat wird durch die Leitung 72 dem Heißkondensatbehälter 74 zugeführt und dort gesammelt. Zur Weiterverwendung dieses Heißkondensats kann dieses durch die Rohrleitung 76 mit eingefügtem Absperrorgan 77 entnommen werden. Das Heißkondensat enthält kaum $C_4$-Verbindungen und kaum Benzol, diese bleiben gasförmig.

Das im Heißabscheider 68 vom Heißkondensat getrennte Gas, das jetzt als Produktgas bezeichnet wird, wird durch die Leitung 78 der Gaspumpe oder dem Gasverdichter 82 zugeführt. Ein Teil des Produktgases kann erforderlichenfalls durch die Produktgasleitung 84 abgeführt werden, sodaß in diesem Falle nur ein Teilstrom des Produktgases zum Gasverdichter 82 geführt wird. Im Gasverdichter wird das Produktgas auf einen Überdruck von vorzugsweise 1 bar, bezogen auf die Umgebungsatmosphäre, gebracht und dann durch die Leitung 78 der Kühlstufe 80 zugeführt. Hier wird das Produktgas auf eine Temperatur von vorzugsweise 1°C abgekühlt. Hierzu wird durch die Leitung 88 ein entsprechend kaltes Kühlmedium, z.B. Kühlsole mit einer Temperatur von ungefähr −5°C dem Wärmetauscher der Kühlstufe zugeführt. Während der Abkühlung in der Kühlstufe 80 kondensiert das Produktgas weitgehend und es entsteht ein Kaltkondensat, das ein leichtes Produktöl (Leichtöl) und Wasser enthält. In dem leichten Produktöl sind die $C_4$-Kohlenwasserstoffverbindungen des Gases und die Aromaten wie Benzol enthalten. Das Kaltkondensat wird zusammen mit dem noch verbleibenden, nicht kondensierten Produktgas durch die Kondensatleitung 92 dem Kaltabscheider 94 zugeführt, in dem sich die flüssigen und die gasförmigen Bestandteile trennen.

Das im Kaltabscheider 94 abgeschiedene Kaltkondensat strömt durch die Leitung 98, das Druckhalteventil 100 sowie die Rohrleitung 102 zum Behälter 104. Die gasförmigen Bestandteile dagegen strömen durch die Umgehungsleitung 132 mit eingefügtem weiteren Druckhalteventil 134 und eingefügtem Rückschlagventil 136 zur Ringleitung 48. Die Druckhalteventile 100, 134 lassen hierbei nur soviel Kaltkondensat bzw. Gas durchströmen, daß der Druck von 1 bar, der von der Gaspumpe 82 erzeugt wird, in der Kühlstufe 80 und im Kaltabscheider 94 aufrechterhalten bleibt. Dieser Druck kann durch eine andere Einstellung der Druckhalteventile 100, 134 erforderlichenfalls variiert werden.

Da der Innenraum 106 des Behälters 104 gegenüber dem Kaltescheider 94 unter einem geringeren Druck, vorzugsweise unter Atmosphärendruck, d.h. unter dem Druck der Umgebungsluft steht, wird das Kaltkondensat beim Durchströmen des Druckhalteventils 100 von 1 bar Überdruck auf diesen geringeren Druck bzw. Atmosphärendruck entspannt. Das im Innenraum 106 angesammelte Kaltkondensat wird durch die Heizeinrichtung 108 auf eine Temperatur von vorzugsweise 25°C erwärmt. Hierzu wird durch die Leitung 110 ein Wärmeträger der Rohrschlange der Heizeinrichtung 108 zugeführt. Der Zufluß wird hierbei durch das Regelventil 120 und den Stellmotor 118 so eingestellt, daß die Temperatur des Kaltkondensats, die der Temperaturfühler 114 erfaßt, auf dem eingestellten Wert von vorzugsweise 25°C gehalten wird.

Durch die Entspannung des Kaltkondensats im Druckhalteventil 100 und durch die Erwärmung des Kaltkondensats im Behälter 104 auf ungefähr 25°C gehen fast die gesamten $C_4$-Kohlenwasserstoffverbindungen, die im Kaltkondensat enthalten sind, in gasförmigen Zustand (Gasphase) über. Diese gasförmigen $C_4$-Kohlenwasserstoffverbindungen sammeln sich im oberen Bereich des Innenraums 106 an, wogegen flüssige Restanteile im Innenraum 106 verbleiben und durch die Abflußleitung 28 entfernt werden können. Aus dem oberen Bereich des Innenraums 106 werden die gasförmigen $C_4$-Kohlenwasserstoffverbindungen, die als Sonderproduktgas bezeichnet werden, über die Sonderproduktgasleitung 122 entnommen und mit Hilfe der Gaspumpe 124 der Ringleitung 48 zugeführt. Hier wird das Sonderproduktgas dem Wirbelgas beigemischt und zusammen mit diesem der Pyrolyse zugeführt. Das Rückschlagventil 126 verhindert hierbei ein Zurückströmen von Gas in den Innenraum 106. Das Sonderproduktgas ist weitgehend wasserfrei.

Durch die zusammen mit dem Wirbelgas in die Pyrolyse bzw. in die heiße Wirbelschicht eingeführten gasförmigen $C_4$-Kohlenwasserstoffverbindungen entsteht ein Gas, das einen sehr großen Anteil von aromatischen Kohlenwasserstoffverbindungen (Aromaten) aufweist, bzw. es wird die Bildung von Aromaten gefördert. Diese Aromaten machen das Pyrolysegas besonders wertvoll und steigern somit die Wirtschaftlichkeit des gesamten Pyrolyseverfahrens.

Durch das Abkühlen des Pyrolysegases in der Vorkühlstufe 60 und das Abtrennen des dabei entstandenen Heißkondensats, das in Form eines heißen Öls anfällt, werden teerartige und staubförmige Komponenten weitgehend entfernt und zusammen mit dem Heißkondensat im Heißkondensatbehälter 74 gesammelt. Dies bietet den Vorteil, daß diese teerartigen und staubförmigen Komponenten, die eine stark emulgierende Wirkung auf Öl-Wasser-Gemische haben, die Öl-Wasser-Trennung im Kaltkondensat nicht mehr störend beeinflussen können. Im Behälter 104 trennt sich daher der Ölanteil des Kaltkondensats sehr leicht vom Wasseranteil des Kaltkondensats. Aus dem Behälter 104 kann daher der Ölanteil, der sehr viel Benzol enthält und gegebenenfalls das Wasser ohne Schwierigkeiten abgezogen werden, z.B. durch die Abflußleitung 128.

Überschüssiges Pyrolysegas kann der Anlage durch die Produktgasleitung 84 und/oder die Gasleitung 138 entnommen werden. Hierbei ist das Gas aus der Gasleitung 138 am wertvollsten, da es weitgehend frei von bei Umgebungstemperatur kondensierbaren Anteilen ist. Das Gas aus der Produktgasleitung 86 oder aus der Gasleitung 138 kann zur Beheizung der Heizrohre 52 verwendet werden oder als Rohstoff für weitere Produkte dienen.

In der Zeichnung sind die verschiedenen Kühlstufen der Deutlichkeit wegen getrennt dargestellt. Es versteht sich, daß durch ihre räumliche Vereinigung die Energiebilanz optimiert werden kann. Das ist in der Figur nicht dargestellt. Auch sind andere für das beschriebene Verfahren unwesentliche Bauteile nicht dargestellt und nicht beschrieben.

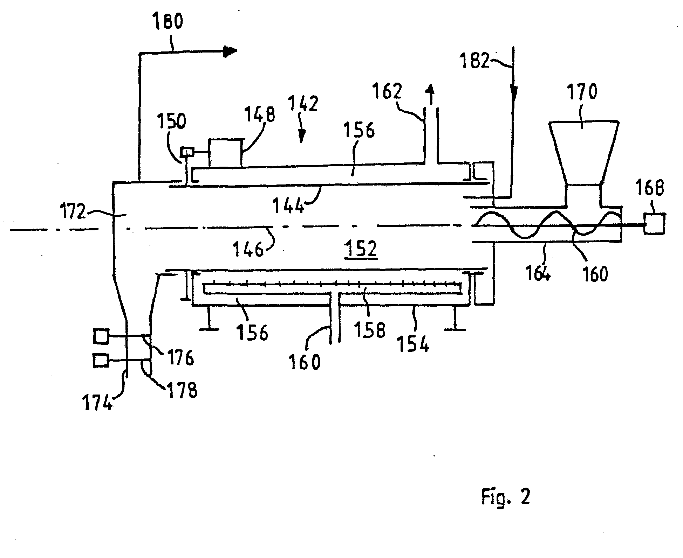

In Figur 2 ist eine Ausführungsvariante des Pyrolysereaktors der Anlage gemäß Figur 1 als Einzelheit dargestellt. Der Pyrolysereaktor 142 weist hierbei eine liegende, hohlzylindrische Retorte oder Trommel 144 auf. Die Längsachse 146 der Trommel ist zweckmäßig zur horizontalen um einen Winkel von ungefähr 3 bis 15° geneigt, wobei der Trommelausgang tiefer liegt als der Trommeleingang. Durch einen Motor 148 wird die Trommel 144 mit Hilfe eines geeigneten Zahnradantriebes 150 um die Längsachse 146 langsam gedreht. Die Trommel 144 ist außerdem von einem nicht drehbaren Gehäuse 154 unter Bildung eines allseitigen Zwischenraums 156 umgeben. Im Zwischenraum 156 ist unterhalb der Trommel 144 eine Heizeinrichtung 158 vorgesehen, die im vorliegenden Fall aus Gasbrennern besteht, die durch die Leitung 160 mit Brenngas gespeist werden. Dieses Brenngas kann hierbei aus Pyrolysegas bestehen. Die bei der Verbrennung entstehenden Rauchgase werden durch das Abzugsrohr 162 oben am Gehäuse 154 abgeführt.

Am rechten Ende ist an den Innenraum 152 eine Zufuhreinrichtung 164 für das zu pyrolysierende Material zentrisch angeschlossen. Die Zufuhreinrichtung weist eine Förderschnecke 166 auf, die von einem Motor 168 angetrieben wird. Die Fördereinrichtung 164 ist mit einem Trichter 170 versehen, durch den das Ausgangsmaterial der Förderschnecke 166 zugeführt wird. Am linken Ende mündet die Trommel 144 in einem Übergangsraum 172, an den unten ein Ausgangsrohr 174 angeschlossen ist. In diesem Ausgangsrohr sind zwei Absperrschieber 176 und 178 mit Abstand übereinander angeordnet und jeweils durch einen Stellmotor angetrieben. Die Ausbildung und der Zweck dieser Absperrschieber ist identisch mit den Absperrschiebern 32, 34 der Figur 1. Im oberen Bereich des Übergangsraumes 172 ist eine Rohrleitung 180 angeschlossen, die zum Gaseintrittsstutzen 55 des Zyklonabscheiders 54 der Figur 1 führt, diese Rohrleitung 180 entspricht der Rohrleitung 53 gemäß Figur 1. Am rechten Ende der Trommel 144 im Bereich des Anschlusses der Zufuhreinrichtung 164 mündet die Sonderproduktgasleitung 182 in den Innenraum 152. Diese Sonderproduktgasleitung 182 entspricht der Sonderproduktgasleitung 122 der Figur 1 und verbindet den Übergangsraum 172 mit der Stelle 133 der Sonderproduktgasleitung 122.

Während des Betriebs wird die Trommel 144 durch den Motor 148 in langsame Umdrehung um die Längsachse 146 versetzt, z.B. 5 bis 10 Umdrehungen pro Minute. Gleichzeitig wird die Trommel 144 durch die Heizeinrichtung 158 auf eine Temperatur von ungefähr 500 bis 850°C gebracht. Jetzt wird das für die Pyrolyse vorgesehene Ausgangsmaterial in den Trichter 170 eingegeben und durch die Förderschnecke 166 in den Innenraum 152 eingebracht; die Absperrschieber 176 und 178 sind hierbei geschlossen. Infolge der Neigung der Trommel und/oder durch die vom Motor 148 bewirkte Drehung der Trommel wandert das Ausgangsmaterial im Innenraum 152 von der Zufuhreinrichtung 164 zum Übergangsraum 172, wobei es pyrolytisch zersetzt wird. Die nichtpyrolysierbaren Restbestandteile treten in den Übergangsraum 172 ein und fallen nach unten zu den Absperrschiebern 176, 178. Durch diese Absperrschieber wird das Restmaterial genau wie bei der Anlage gemäß Figur 1 ausgeschleust und durch das Ausgangsrohr 174 abgeführt. Die Abgase der Heizeinrichtung 158 werden durch das Abzugsrohr 162 zu einem nicht dargestellten Kamin geleitet.

Die bei der Pyrolyse entstehenden Pyrolysegase treten in den Übergangsraum 172 ein und werden durch die Rohrleitung 180 dem Zyklonabscheider 54 der Figur 1 zugeführt. Die weitere Behandlung dieses Gases geschieht dann wie im Zusammenhang mit Figur 1 beschrieben. Die im Behälter 104 erzeugten gasförmigen $C_4$-Kohlenwasserstoffe werden durch die Sonderproduktgasleitung 182 dem rechten Ende des Innenraums 152 der Trommel 144 zugeführt. Das gleiche gilt auch für die Gase aus der Umgehungsleitung 132.

Die $C_4$-Kohlenwasserstoffe fördern auch hier die Bildung von Aromaten während des Pyrolysevorganges in der Trommel 144.

In den vorbeschriebenen Ausführungsbeispielen wurde das Pyrolysegas in der Vorkühlstufe 60 vorgekühlt. Wenn hierauf verzichtet werden soll, so wird der Zyklonabscheider 54 gasseitig direkt mit dem Gasverdichter 82 verbunden. Dies ist in Figur 1 nicht gezeigt.

**Patentansprüche**

1. Verfahren zum pyrolytischen Aufarbeiten von Kunststoff, Gummi, andere Kohlenwasserstoffmaterialien und dergleichen enthaltendem Ausgangsmaterial, insbesondere Abfallmaterial wie z.B. Altgummi, Altreifen und/oder Kunstoffabfällen, wobei das bei der Pyrolyse entstehende Pyrolysegas abgekühlt, das entstandene kondensat abgetrennt und das verbleibende Produktgas teilweise in die Pyrolyse zurückgeleitet und teilweise verwertet und/oder weiterverarbeitet wird, dadurch gekennzeichnet, daß zumindest ein Teilstrom des Pyrolysegases auf einen Druck von ungefähr 0,8 bis 1,4 bar Überdruck und dann in einer Kühlstufe (80) auf eine dicht über dem Gefrierpunkt des Wassers liegende Temperatur gebracht wird, daß das in der Kühlstufe (80) entstandene Kaltkondensat abgetrennt, auf einen geringeren Druck, vorzugsweise auf Atmosphärendruck entspannt und auf eine normale Lagertemperatur im Bereich üblicher Umgebungstemperaturen erwärmt wird, und daß das dabei freiwerdende Gas als Sonderproduktgas in die Pyrolyse zurückgeleitet wird.

2. Verfahren nach Anspruch 1, dadurch gekennzeichnet, daß das Pyrolysegas vor dem Eintreten in die Kühlstufe (80) in einer Vorkühlstufe (60) auf eine Temperatur im Bereich von 100 bis 150°C abgekühlt, und das dabei entstandene Heißkondensat abgetrennt wird.

3. Verfahren nach Anspruch 2, dadurch gekennzeichnet, daß das Pyrolysegas auf eine Temperatur von etwa 110 bis 130°C, vorzugsweise ungefähr 120°C abgekühlt wird.

4. Verfahren nach einem der Ansprüche 1 bis 3, dadurch gekennzeichnet, daß das Pyrolysegas auf einen Überdruck von ungefähr 0,9 bis 1,2 bar, vorzugsweise auf ungefähr 1 bar gebracht wird.

5. Verfahren nach einem der Ansprüche 1 bis 4, dadurch gekennzeichnet, daß als dicht über dem Gefrierpunkt des Wassers liegende Temperatur eine Temperatur von etwa 0,5 bis 2°C, vorzugsweise ungefähr 1°C angewandt wird.

6. Verfahren nach einem der Ansprüche 1 bis 5, dadurch gekennzeichnet, daß als Lagertemperatur eine Temperatur von etwa 18 bis 30°C, vorzugsweise ungefähr 25°C verwendet wird.

7. Verfahren nach einem der Ansprüche 1 bis 6, dadurch gekennzeichnet, daß die Pyrolyse in einer Wirbelschicht durchgeführt wird, die durch Zufuhr eines Wirbelgases aufrecht erhalten wird, wobei das Sonderproduktgas mit dem Wirbelgas der Pyrolyse zugeleitet wird.

8. Verfahren nach Anspruch 7, dadurch gekennzeichnet, daß das Wirbelgas im unteren Bereich (28) des Pyrolysereaktors (10) in der Nähe der Seitenwand mit einer Blasrichtung von oben nach unten eingeblasen wird.

9. Verfahren nach einem der Ansprüche 1 bis 6, dadurch gekennzeichnet, daß die Pyrolyse in einer drehbaren, hohlzylindrischen Retorte (144) durchgeführt wird, und daß das Sonderproduktgas im Bereich des Eintritts der Kohlenwasserstoffmaterialien in die Retorte eingeführt wird (Fig. 2).

### Claims

1. Process for the pyrolytic reprocessing of starting material containing plastic, rubber, other hydrocarbon materials and the like, in particular scrap material such as for example old rubber, old tyres and/or plastic scrap, the pyrolysis gas produced during pyrolysis being cooled, the condensate produced being separated off and the remaining product gas partly being returned to the pyrolysis and partly being utilized and/or processed further, characterized in that at least a part-stream of the pyrolysis gas is brought to a pressure of approximately 0.8 to 1.4 bar gauge pressure and then, in a cooling stage (80), brought to a temperature just above the freezing point of water, in that the cold condensate produced in the cooling stage (80) is separated off, relieved to a lower pressure, preferably to atmospheric pressure, and heated to a normal storage temperature in the range of usual ambient temperatures, and in that the gas thereby released is returned to the pyrolysis as special product gas.

2. Process according to Claim 1, characterized in that, before entry into the cooling stage (80), the pyrolysis gas is cooled in a precooling stage (60) to a temperature in the range of 100 to 150°C, and the hot condensate thereby produced is separated off.

3. Process according to Claim 2, characterized in that the pyrolysis gas is cooled to a temperature of approximately 110 to 130°C, preferably approximately 120°C.

4. Process according to one of Claims 1 to 3, characterized in that the pyrolysis gas is brought to a gauge pressure of approximately 0.9 to 1.2 bar, preferably to approximately 1 bar.

5. Process according to one of Claims 1 to 4, characterized in that a temperature of approximately 0.5 to 2°C, preferably approximately 1°C, is used as temperature just above the freezing point of water.

6. Process according to one of Claims 1 to 5, characterized in that a temperature of approximately 18 to 30°C, preferably approximately 25°C, is used as storage temperature.

7. Process according to one of Claims 1 to 6, characterized in that the pyrolysis is carried out in a fluidized bed, which is maintained by feeding of a fluidizing gas, the special product gas being fed with the fluidizing gas to the pyrolysis.

8. Process according to Claim 7, characterized in that the fluidizing gas is blown in with a blowing direction from top to bottom in the lower region (28) of the pyrolysis reactor (10) in the vicinity of the side wall.

9. Process according to one of Claims 1 to 6, characterized in that the pyrolysis is carried out in a rotatable, hollow-cylindrical retort (144), and in that the special product gas is introduced into the retort in the region of the entry of the hydrocarbon materials (Fig. 2).

### Revendications

1. Procédé pour le retraitement pyrolytique de matière première contenant de la matière plastique, du caoutchouc, d'autres matériaux hydrocarbonés et similaires, en particulier de matériaux de déchet, comme par exemple déchets de caoutchouc, pneus usagés et/ou déchets de matières plastiques, dans lequel le gaz de pyrolyse produit lors de la pyrolyse est refroidi, le condensat formé est séparé et le gaz-produit restant est en partie renvoyé dans la pyrolyse et en partie utilisé et/ou retraité, caractérisé en ce qu'au moins un courant partiel du gaz de pyrolyse est mis sous une pression d'environ 0,8 à 1,4 bar de surpression, puis, dans une unité de refroidissement (80), est amené à une température située juste au-dessus du point de congélation de l'eau, en ce que le condensat froid formé dans l'unité de refroidissement (80) est séparé, détendu jusqu'à une pression plus basse, de préférence jusq'à la pression atmosphérique, et réchauffé jusqu'à une température normale de stockage dans la plage des températures ambiantes usuelles, et en ce que le gaz libéré à cette occasion est renvoyé dans la pyrolyse, en tant que gaz-produit spécial.

2. Procédé selon la revendication 1, caractérisé par le fait qu'avant de pénétrer dans l'unité de refroidissement (80), le gaz de pyrolyse est refroidi jusqu'à une température dans la plage de 100 à 150°C dans une unité de prérefroidissement (60) et le condensat chaud formé à cette occasion est séparé.

3. Procédé selon la revendication 2, caractérisé par le fait que le gaz de pyrolyse est refroidi jusqu'à une température d'environ 110 à 130°C, de préférence d'environ 120°C.

4. Procédé selon l'une des revendications 1 à 3, caractérisé par le fait que le gaz de pyrolyse est mis sous une surpression d'environ 0,9 à 1,2 bar, de préférence d'environ 1 bar.

5. Procédé selon l'une des revendications 1 à 4, caractérisé par le fait qu'en tant que température située juste au-dessus du point de congélation de l'eau, on utilise une température d'environ 0,5 à 2°C, de préférence d'environ 1°C.

6. Procédé selon l'une des revendications 1 à 5, caractérisé par le fait qu'en tant que température de stockage, on utilise une température d'environ 18 à 30°C, de préférence d'environ 25°C.

7. Procédé selon l'une des revendications 1 à 6, caractérisé par le fait que l'on effectue la pyrolyse dans un lit fluidisé qui est maintenu par apport d'un gaz de fluidisation, le gaz-produit spécial étant envoyé à la pyrolyse avec le gaz de fluidisation.

8. Procédé selon la revendication 7, caractérisé par le fait que le gaz de fluidisation est insufflé dans la partie inférieure (28) du réacteur de pyrolyse (10) au voisinage de la paroi latérale, avec une direction d'insufflation de haut en bas.

9. Procédé selon l'une des revendications 1 à 6, caractérisé en ce que l'on effectue la pyrolyse dans une cornue tubulaire rotative (144), et en ce que le gaz-produit spécial est envoyé dans la cornue dans la zone de l'entrée des matériaux hydrocarbonés (fig. 2).

EP 0 226 895 B1

Fig.1

Fig. 2